# EUROPEAN PATENT APPLICATION

(11) **EP 4 395 030 A1**
(43) Date of publication of application: **03.07.2024**
(21) Application number: 22860551.5
(22) Date of filing: 24.08.2022
(51) Int. Cl.: H01M 50/242

(54) **BATTERY PACK AND VEHICLE**

(30) Priority: 27.08.2021 CN 202122052462 U
(71) Applicant: Beijing CHJ Information Technology Co., Ltd., Beijing 101399 (CN)
(72) Inventor: QI, Pengfei, Beijing 101399 (CN)
(74) Representative: advotec.
(86) International application number: PCT/CN2022/114584
(87) International publication number: WO 2023/025205

(57) **Abstract**

Disclosed are a battery pack and a vehicle. The battery pack comprises a case body and battery units arranged in the case body. Each unit battery comprises a top cover and a pole arranged on the top cover, wherein a supporting member is arranged between the top cover and the case body, such that an avoidance portion is formed between the pole and the case body.

## Description

### CROSS-REFERENCE TO RELATED APPLICATION

This application claims priority to and benefits of Chinese Patent Application No. 202122052462.6, filed on August 27, 2021, the entire content of which is incorporated herein by reference.

### FIELD

The present disclosure relates to a field of vehicles, and more particularly to a battery pack and a vehicle.

### BACKGROUND

A battery pack generally includes a case and a battery unit arranged in the case. A pole of the battery unit is arranged opposite a side of the case. When the battery pack is installed in a vehicle, and a bottom of the vehicle is subjected to a collision during the driving of the vehicle, a collision object will squeeze the side of the case, and the deformation in the side of the case will squeeze the pole, which will cause the safety risk of the battery pack.

### SUMMARY

Embodiments of the present disclosure provide a battery pack and a vehicle.

Embodiments of a first aspect of the present disclosure provide the battery pack, the battery pack includes a case and a cell component arranged in the case, and the cell component includes a top cover and a pole arranged on the top cover. A support member is arranged between the top cover and the case, so that an avoidance part is formed between the pole and the case.

In some embodiments, the support member includes an upper support rib and a lower support rib connected with each other, the upper support rib abuts against the top cover, and the lower support rib abuts against the case.

In some embodiments, the support member includes a first oblique support rib and a second oblique support rib; a top of the first oblique support rib and a top of the second oblique support rib are connected to both sides of the upper support rib, respectively; a bottom of the first oblique support rib and a bottom of the second oblique support rib are connected to both sides of the lower support rib, respectively; and a distance between the first oblique support rib and the second oblique support rib gradually increases along a direction from the upper support rib to the lower support rib; and/or, the support member further includes a first oblique force transmission rib and a second oblique force transmission rib; one end of the first oblique force transmission rib is connected with the lower support rib, and the other end of the first oblique force transmission rib forms a first pole lateral support surface; and one end of the second oblique force transmission rib is connected with the lower support rib, and the other end of the second oblique force transmission rib forms a second pole lateral support surface.

In some embodiments, the support member includes a transverse reinforcing rib, two ends of the transverse reinforcing rib are connected with the first oblique support rib and the second oblique support rib, respectively, and the transverse reinforcing rib is located between the upper support rib and the lower support rib; and/or, the support member includes a first oblique reinforcing rib and a second oblique reinforcing rib; one end of the first oblique reinforcing rib is connected with the first oblique support rib, and the other end of the first oblique reinforcing rib is connected with the first oblique force transmission rib; and one end of the second oblique reinforcing rib is connected with the second oblique support rib, and the other end of the second oblique reinforcing rib is connected with the second oblique force transmission rib.

In some embodiments, the support member includes a first limiting rib and a second limiting rib; one end of the first limiting rib is connected with the upper support rib, and the other end of the first limiting rib is connected with the first oblique force transmission rib; and one end of the second limiting rib is connected with the upper support rib, and the other end of the second limiting rib is connected with the second oblique force transmission rib.

In some embodiments, the first limiting rib includes a first bent part, and the second limiting rib includes a second bent part.

In some embodiments, the support member further includes a first pole insulation rib and a second pole insulation rib; the first pole insulation rib is connected with the first oblique force transmission rib; and the second pole insulation rib is connected with the second oblique force transmission rib.

In some embodiments, the cell component includes a first battery module and a second battery module, and the first battery module and the second battery module are arranged side by side; the first battery module includes a plurality of first battery units, the plurality of first battery units are stacked in sequence along an arrangement direction, and the first battery unit includes a first top cover plate and a first pole arranged on the first top cover plate; the second battery module includes a plurality of second battery units, the plurality of second battery units are stacked in sequence along the arrangement direction, and the second battery unit includes a second top cover plate and a second pole arranged on the second top cover plate; the support member is arranged between the first top cover plate, the second top cover plate and the case, and the support member extends along the arrangement direction; and the upper support rib abuts against the first top cover plate and the second top cover plate, respectively.

In some embodiments, a gap is defined between the first battery unit and the second battery unit; and the support member includes a convex rib arranged on a top of the upper support rib and located in the gap.

Embodiments of a second aspect of the present disclosure provide the vehicle, and the vehicle includes the battery pack according to the embodiments of the first aspect of the present disclosure.

Embodiments of the present disclosure have the following advantages.

In the battery pack provided in the embodiments of the present disclosure, the support member is arranged between the top cover and the case, so that the avoidance part is formed between the pole and the case. On the one hand, the support member may play a cushioning role, thus reducing the risk of the pole being subjected to a collision force; on the other hand, the avoidance part may serve as a space for deformation when the case is subjected to a collision, thus reducing the possibility that the pole is damaged by being squeezed by the case due to the deformation of the case. When the case is subjected to the collision, the case may transmit the collision force applied thereto to the top cover and a housing below the top cover through the support member, and the collision force may also be transmitted to an edge of the housing, so that an electrode component inside the cell component is not prone to be damaged when the case is subjected to the collision, thus improving the safety of the battery pack.

### BRIEF DESCRIPTION OF THE DRAWINGS

The drawings herein are incorporated into the specification and form a part of the specification, show embodiments that comply with the present disclosure, and are used to explain the principles of the present disclosure together with the specification.

In order to more clearly explain the technical solution of embodiments of the present disclosure, the drawings required to be used in the embodiments will be briefly described below, and it is obvious for those skilled in the art that other drawings can be obtained according to these drawings without creative efforts.
FIG 1 is an exploded view of a battery pack according to embodiments of the present disclosure;
FIG 2 is a sectional view of a battery pack according to embodiments of the present disclosure;
FIG 3 is a partial enlarged view of FIG 2;
FIG 4 is a sectional view of a first battery unit in a battery pack according to embodiments of the present disclosure;
FIG 5 is a sectional view of a support member in a battery pack according to embodiments of the present disclosure.

References signs: first battery unit 1; first top cover plate 11; first pole 12; electrode component 13; housing 14; second battery unit 2; second top cover plate 21; second pole 22; case 3; support member 4; upper support rib 411; lower support rib 412; first oblique support rib 421; second oblique support rib 422; transverse reinforcing rib 431; first oblique force transmission rib 441; second oblique force transmission rib 442; first oblique reinforcing rib 451; second oblique reinforcing rib 452; first limiting rib 461; first bent part 461a; second limiting rib 462; second bent part 462a; first pole insulation rib 471; second pole insulation rib 472; convex rib 481; first pole lateral support surface 491; second pole lateral support surface 492; gap 5.

### DETAILED DESCRIPTION

In order to more clearly understand the purpose, features and advantages of the present disclosure, the embodiments of the present disclosure will be further described below. It should be noted that the embodiments of the present disclosure and the features in the embodiments may be combined with each other without conflict.

In order to fully understand the present disclosure, many specific details are explained in the following description, but the present disclosure may also be implemented in other ways different from those described here. Apparently, the embodiments in the description are only a part of the embodiments of the present disclosure, but not all of them.

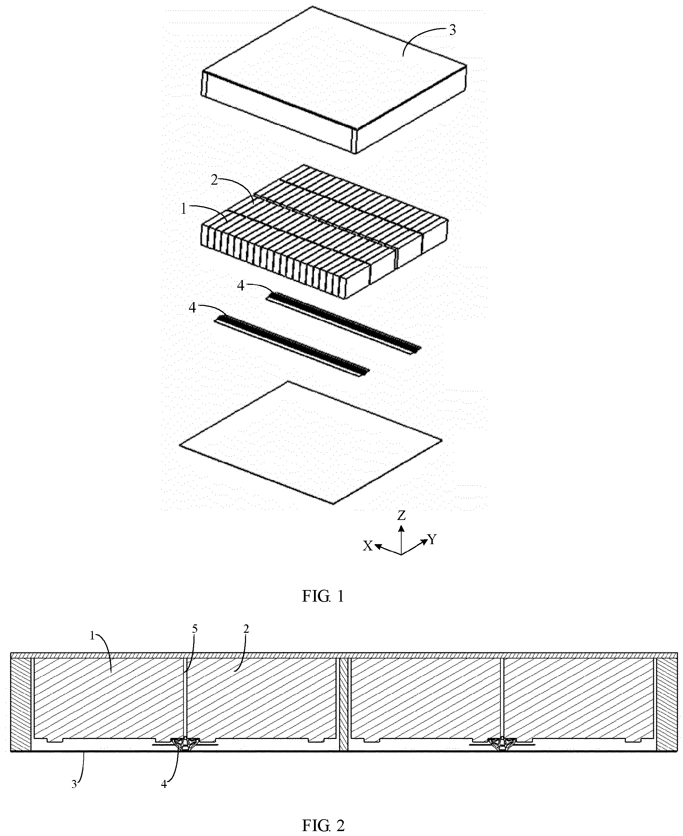

As shown in FIG 1 and FIG 2, a battery pack includes a case 3 and a cell component arranged in the case 3, the case 3 may be made of aluminum, aluminum alloy or other metal materials, and the case 3 has an accommodating cavity inside. In some embodiments, the case 3 is a case 3 structure with an opening at its top and includes an upper case cover. A size of the upper case cover is equal to a size of the opening at the top of the case 3, and the upper case cover may be fixed to the opening by means of a fastener such as bolts, so as to form the accommodating cavity. Meanwhile, in order to improve the airtightness of the case 3, a sealing member may be arranged between the upper case cover and the case 3.

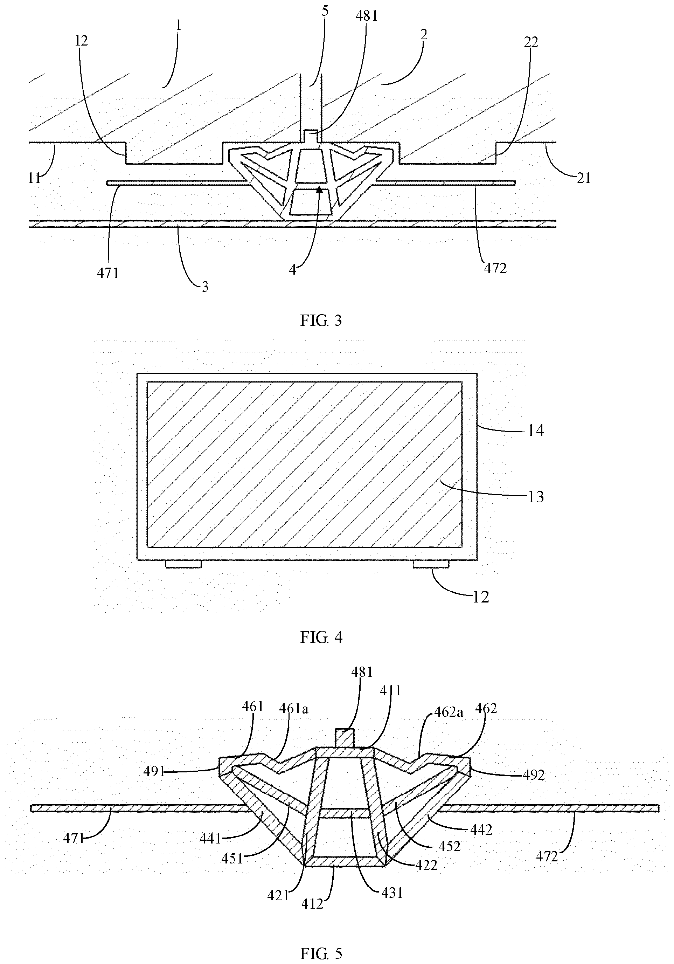

As shown in FIG 2 and FIG 3, the battery pack provided in the embodiments of the present disclosure includes the case 3 and the cell component arranged in the case 3, and the cell component includes a top cover and a pole arranged on the top cover. A support member 4 is arranged between the top cover and the case 3, so that an avoidance part is formed between the pole and the case. On the one hand, the support member 4 may play a cushioning role, thus reducing the risk of the pole being subjected to a collision force. On the other hand, the avoidance part may serve as a space for deformation when the case is subjected to a collision, thus reducing the possibility that the pole is damaged by being squeezed by the case 3 due to the deformation of the case. When the case is subjected to the collision, the case 3 may transmit the collision force applied thereto to the top cover and a housing below the top cover through the support member 4, and the collision force may also be transmitted to an edge of the housing, so that an electrode component inside the cell component is not prone to be damaged when the case 3 is subjected to the collision, thus improving the safety of the battery pack.

The avoidance part may be an avoidance gap formed between the case 3 and the pole.

In some specific embodiments, the support member 4 includes an upper support rib 411 and a lower support rib 412 that are connected with each other, the upper support rib 411 abuts against the top cover, and the lower support rib 412 abuts against the case 3. On the one hand, the support member 4 may play the cushioning role, thus reducing the risk of the pole being subjected to the collision force. On the other hand, when the case 3 is subjected to the collision, the case 3 may transmit the collision force applied thereto to the lower support rib 412, the lower support rib 412 will transmit the force to the upper support rib 411, and then the upper support rib 411 will transmit the force to the housing. The collision force may be transmitted to the edge of the housing by arranging the support member 4 between the top cover and the case 3, so that the electrode component inside the cell component is not prone to be damaged, thus improving the safety of the battery pack.

In some specific embodiments, one or two or more battery modules may be accommodated in the accommodating cavity of the case 3, the battery modules may be arranged side by side along a length direction of the battery pack or along a width direction of the battery pack in the case 3, and each battery module is fixed with the case 3.

Specifically, the cell component includes the battery module which includes a plurality of battery units and a frame structure, the battery unit may be a secondary battery that can be repeatedly charged and discharged, the frame structure includes an end plate, a side plate, a top plate and a bottom plate connected with each other, the plurality of battery units are located in an inner cavity of the frame structure and are stacked with each other in the inner cavity, and a stacking direction may be a length direction, a width direction, or a height direction.

As shown in FIG 4, the battery unit includes an electrode component 13, a top cover component and a housing 14, the housing 14 may have a hexahedral shape or other shapes, an accommodating chamber is formed inside the housing 14 for accommodating the electrode component 13 and an electrolyte, an end of the housing 14 has an opening so that the electrode component 13 may be placed in the accommodating chamber of the housing 14 through the opening, a plurality of electrode components 13 may be arranged in the accommodating chamber, and the plurality of electrode components 13 are stacked with each other. The housing 14 may include metal materials, such as aluminum or aluminum alloy, etc., and may also include insulating materials, such as plastics and the like.

The top cover component includes a top cover plate and two poles, and the top cover plate is fixed at the opening of the housing 14 and has an explosion-proof opening, thereby enclosing the electrode component 13 and the electrolyte in the accommodating chamber of the housing 14. The pole is arranged on the top cover plate and includes a positive pole and a negative pole.

As shown in FIG 2 and FIG 3, in the battery pack provided in the embodiments of the present disclosure, the cell component includes a first battery module and a second battery module, and the first battery module and the second battery module are arranged side by side. The first battery module includes a plurality of first battery units 1, the plurality of first battery units 1 are stacked in sequence along an arrangement direction, and the first battery unit 1 includes a first top cover plate 11 and a first pole 12 arranged on the first top cover plate 11. The second battery module includes a plurality of second battery units 2, the plurality of second battery units 2 are stacked in sequence along the arrangement direction, and the second battery unit 2 includes a second top cover plate 21 and a second pole 22 arranged on the second top cover plate 21. The support member 4 is arranged between the first top cover plate 11, the second top cover plate 21 and the case 3, and the support member 4 extends along the arrangement direction. In this case, the avoidance part is the avoidance gap between the first pole 12, the second pole 22 and the case 3.

It should be noted that the arrangement direction described in this embodiment is a length direction X of the battery pack. The support member may be a plastic member or a rubber member.

In some embodiments, the first battery module and the second battery module are arranged side by side along a width direction Y of the battery pack; the plurality of first battery units 1 are stacked in sequence and the plurality of second battery units 2 are stacked in sequence along the length direction X of the battery pack; and the support member 4 extends along the length direction X.

The support member 4 includes the upper support rib 411 and the lower support rib 412 that are connected with each other. In some embodiments, the upper support rib 411 and the lower support rib 412 are parallel. The upper support rib 411 abuts against the first top cover plate 11 and the second top cover plate 21, respectively, and the lower support rib 412 abuts against the case 3. On the one hand, the support member 4 may play the cushioning role, thus reducing the risk of the first pole 12 and the second pole 22 being subjected to a Z-direction force. On the other hand, when the case 3 is subjected to the collision, the case 3 may transmit the collision force applied thereto to the lower support rib 412, the lower support rib 412 will transmit the force to the upper support rib 411, and then the upper support rib 411 will transmit the force to the housing 14 of the first battery unit 1 and the housing of the second battery unit 2. By arranging the support member 4 between the first top cover plate 11, the second top cover plate 21 and the case 3, the collision force may be transmitted to the edge of the housing 14 of the first battery unit 1 or the edge of the housing of the second battery unit 2, so that the electrode component 13 inside the first battery unit 1 or inside the second battery unit 2 is not prone to be damaged, thus improving the safety of the battery pack.

As shown in FIG 3 and FIG 5, the support member 4 includes a first oblique support rib 421 and a second oblique support rib 422. A top of the first oblique support rib 421 and a top of the second oblique support rib 422 are connected to both sides of the upper support rib 411, respectively; and a bottom of the first oblique support rib 421 and a bottom of the second oblique support rib 422 are connected to both sides of the lower support rib 412, respectively. The first oblique support rib 421 is inclined towards the first pole 12 along a direction from the upper support rib 411 to the lower support rib 412, and a portion of the first oblique support rib 421 adjacent to the upper support rib 411 is aligned with an outer edge of the first battery unit 1, which is conducive to transmitting the force to the edge of the housing 14 of the first battery unit 1, so that the electrode component 13 inside the first battery unit 1 is not prone to be damaged. The second oblique support rib 422 is inclined towards the second pole 22 along the direction from the upper support rib 411 to the lower support rib 412, and a portion of the second oblique support rib 422 adjacent to the upper support rib 411 is aligned with an outer edge of the second battery unit 2, which is conducive to transmitting the force to the edge of the housing of the second battery unit 2, so that the electrode component 13 inside the second battery unit 2 is not prone to be damaged.

The distance between the first oblique support rib 421 and the second oblique support rib 422 gradually increases. In other words, the upper support rib 411, the lower support rib 412, the first oblique support rib 421 and the second oblique support rib 422 enclose and form a trapezoid. As shown in FIG 5, the first oblique support rib 421 is at an angle with a vertical direction, and a lower distance between the first oblique support rib 421 and the second oblique support rib 422 is greater than an upper distance therebetween due to this angle, which is also conducive to transmitting the force to the edge of the housing 14 of the first battery unit 1, thus reducing the risk of the first pole 12 being subjected to the Z-direction force and improving the safety of the battery pack. In some embodiments, the included angle between the first oblique support rib 421 and a height direction Z of the battery pack is 0 to 90°. The second oblique support rib 422 is at an angle with the vertical direction, and the lower distance between the first oblique support rib 421 and the second oblique support rib 422 is greater than the upper distance therebetween due to this angle, which is also conducive to transmitting the force to the edge of the housing 14 of the second battery unit 2, thus reducing the risk of the second pole 22 being subjected to the Z-direction force and improving the safety of the battery pack. In some embodiments, the included angle between the second oblique support rib 422 and the height direction Z of the battery pack is 0 to 90°.

In some specific embodiments, the support member 4 further includes a transverse reinforcing rib 431, two ends of the transverse reinforcing rib 431 are connected with the first oblique support rib 421 and the second oblique support rib 422, respectively, and the transverse reinforcing rib 431 is located between the upper support rib 411 and the lower support rib 412. The transverse reinforcing rib 431 reinforces the first oblique support rib 421 and the second oblique support rib 422, which can increase a critical value of compression instability of the first oblique support rib 421 and the second oblique support rib 422, thus reducing the risk of the first pole 12 and the second pole 22 being subjected to the Z-direction force, and improving the safety of the battery pack.

In some specific embodiments, the support member 4 further includes a first oblique force transmission rib 441 and a second oblique force transmission rib 442. One end of the first oblique force transmission rib 441 is connected with the lower support rib 412, and the other end of the first oblique force transmission rib 441 forms a first pole lateral support surface 491. One end of the second oblique force transmission rib 442 is connected with the lower support rib 412, and the other end of the second oblique force transmission rib 442 forms a second pole lateral support surface 492. When the collision force is greater than a certain value, the first oblique support rib 421 and the second oblique support rib 422 are compressed and deformed, the first oblique support rib 421 is moved closer to the first pole 12, the second oblique support rib 422 is moved closer to the second pole 22, the first pole 12 and the second pole 22 resist the lateral sliding of the first pole lateral support surface 491 and the second pole lateral support surface 492, respectively, and the lower support rib 412 may be pulled by the first oblique force transmission rib 441 and the second oblique force transmission rib 442, so as to weaken the compression trend of the lower support rib 412 towards the upper support rib 411, so that the collision force that the lower support rib 412 is subjected to is transmitted to the housing 14 of the first battery unit 1 and the housing 14 the second battery unit 2, thus reducing the risk of the first pole 12 and the second pole 22 being subjected to the Z-direction force, and improving the safety of the battery pack.

In some specific embodiments, the support member 4 further includes a first oblique reinforcing rib 451 and a second oblique reinforcing rib 452. One end of the first oblique reinforcing rib 451 is connected with the first oblique support rib 421, and the other end of the first oblique reinforcing rib 451 is connected with the first oblique force transmission rib 441. One end of the second oblique reinforcing rib 452 is connected with the second oblique support rib 422, and the other end of the second oblique reinforcing rib 452 is connected with the second oblique force transmission rib 442. The first oblique reinforcing rib 451 and the first oblique force transmission rib 441 that are cooperated can increase a critical value of compression instability of the support member 4, and the second oblique reinforcing rib 452 and the second oblique force transmission rib 442 that are cooperated can increase the critical value of compression instability of the support member 4, thus reducing the risk of the first pole 12 and the second pole 22 being subjected to the Z-direction force, and improving the safety of the battery pack.

In some specific embodiments, the support member 4 includes a first limiting rib 461 and a second limiting rib 462. One end of the first limiting rib 461 is connected with the upper support rib 411, and the other end of the first limiting rib 461 is connected with the first oblique force transmission rib 441, so that the sliding of the first oblique force transmission rib 441 and the first oblique reinforcing rib 451 in a direction of the first pole 12 is restricted, thus preventing the support member 4 from slipping out of a height range of the first battery unit 1 or the second unit.

One end of the second limiting rib 462 is connected with the upper support rib 411, and the other end of the second limiting rib 462 is connected with the second oblique force transmission rib 442, so that the sliding of the second oblique force transmission rib 442 and the second oblique reinforcing rib 452 in a direction of the second pole 22 is restricted, thus preventing the support member 4 from slipping out of the height range of the first battery unit 1 or the second unit, and improving the safety of the battery pack.

In some specific embodiments, the first limiting rib 461 includes a first bent part 461a, the first bent part 461a may be lengthened under tension, and when the first bent part 461a is nearly safely unfolded, the first pole lateral support surface 491 is in contact with the first pole 12. In one embodiment, the first limiting rib 461 is thinner than the other ribs in thickness so as to be unfolded easily. The second limiting rib 462 includes a second bent part 462a, the second bent part 462a may be lengthened under tension, and when the second bent part 462a is nearly safely unfolded, the second pole lateral support surface 492 is in contact with the second pole 22. In one embodiment, the second limiting rib 462 is thinner than the other ribs in thickness so as to be unfolded easily.

In some specific embodiments, the support member 4 further includes a first pole insulation rib 471 and a second pole insulation rib 472. The first pole insulation rib 471 is connected with the first oblique force transmission rib 441, and the first oblique force transmission rib 441 is located between the first pole 12 and the case 3, thus reducing the possibility of short circuit caused by contact between the case 3 and the first pole 12. The second pole insulation rib 472 is connected with the second oblique force transmission rib 442, and the second oblique force transmission rib 442 is located between the second pole 22 and the case 3, thus reducing the possibility of short circuit caused by contact between the case 3 and the second pole 22.

In some specific embodiments, a gap 5 is defined between the first battery unit 1 and the second battery unit 2, the support member 4 includes a convex rib 481, and the convex rib 481 is arranged on a top of the upper support rib 411 and is located in the gap 5. The convex rib 481 is located between the first battery unit 1 and the second battery unit 2, which can avoid the situation that the support member 4 slides towards the first pole 12 or the second pole 22 when the support member 4 is subjected to an uneven force, which otherwise will result in that the support member 4 cannot play a support role.

A vehicle provided in the embodiments of the present disclosure includes the battery pack provided in the embodiments of the present disclosure. The vehicle provided in the embodiments of the present disclosure has the same advantages as the battery pack provided in the embodiments of the present disclosure, which are not repeated herein.

It should be noted that in the present disclosure, relative terms such as "first" and "second" are only used to distinguish one entity or operation from another entity or operation, and do not necessarily require or imply any such actual relationship or order between these entities or operations. Furthermore, the terms "include", "comprise" or any other variation thereof are intended to cover non-exclusive inclusions, so that a process, method, article, or device including a series of elements includes not only those elements, but also other elements that are not expressly listed, or also includes elements inherent in such process, method, article, or device. Without further limitation, an element defined by the phrase "comprising a ..." does not exclude the presence of additional identical elements in the process, method, article or device including this element.

The above descriptions are only the specific embodiments of the present disclosure, so that those skilled in the art can understand or implement the present disclosure. Various modifications to these embodiments will be apparent to those skilled in the art, and the general principles defined herein may be implemented in other embodiments without departing from the scope of the present disclosure. Therefore, the present disclosure will not be limited to the embodiments described herein, but conforms to the widest scope consistent with the principles and novel characteristics disclosed herein.

All the embodiments of the present disclosure may be implemented independently or in combination with other embodiments, which are all regarded as the scope of protection claimed by the present disclosure.

## Claims

1. A battery pack, comprising a case (3) and a cell component arranged in the case (3), and the cell component comprising a top cover and a pole arranged on the top cover;
wherein a support member (4) is arranged between the top cover and the case (3), so that an avoidance part is formed between the pole and the case.

2. The battery pack according to claim 1, wherein the support member (4) comprises an upper support rib (411) and a lower support rib (412) connected with each other, the upper support rib (411) abuts against the top cover, and the lower support rib (412) abuts against the case (3).

3. The battery pack according to claim 2, wherein the support member (4) comprises a first oblique support rib (421) and a second oblique support rib (422); a top of the first oblique support rib (421) and a top of the second oblique support rib (422) are connected to both sides of the upper support rib (411), respectively; a bottom of the first oblique support rib (421) and a bottom of the second oblique support rib (422) are connected to both sides of the lower support rib (412), respectively; and a distance between the first oblique support rib (421) and the second oblique support rib (422) gradually increases along a direction from the upper support rib (411) to the lower support rib (412); and/or
the support member (4) comprises a first oblique force transmission rib (441) and a second oblique force transmission rib (442); one end of the first oblique force transmission rib (441) is connected with the lower support rib (412), and the other end of the first oblique force transmission rib (441) forms a first pole lateral support surface (491); and one end of the second oblique force transmission rib (442) is connected with the lower support rib (412), and the other end of the second oblique force transmission rib (442) forms a second pole lateral support surface (492).

4. The battery pack according to claim 3, wherein the support member (4) comprises a transverse reinforcing rib (431), two ends of the transverse reinforcing rib (431) are connected with the first oblique support rib (421) and the second oblique support rib (422), respectively, and the transverse reinforcing rib (431) is located between the upper support rib (411) and the lower support rib (412); and/or
the support member (4) comprises a first oblique reinforcing rib (451) and a second oblique reinforcing rib (452); one end of the first oblique reinforcing rib (451) is connected with the first oblique support rib (421), and the other end of the first oblique reinforcing rib (451) is connected with the first oblique force transmission rib (441); and one end of the second oblique reinforcing rib (452) is connected with the second oblique support rib (422), and the other end of the second oblique reinforcing rib (452) is connected with the second oblique force transmission rib (442).

5. The battery pack according to claim 3 or 4, wherein the support member (4) comprises a first limiting rib (461) and a second limiting rib (462);
one end of the first limiting rib (461) is connected with the upper support rib (411), and the other end of the first limiting rib (461) is connected with the first oblique force transmission rib (441); and
one end of the second limiting rib (462) is connected with the upper support rib (411), and the other end of the second limiting rib (462) is connected with the second oblique force transmission rib (442).

6. The battery pack according to claim 5, wherein the first limiting rib (461) comprises a first bent part (461a), and the second limiting rib (462) comprises a second bent part (462a).

7. The battery pack according to any one of claims 3-6, wherein the support member (4) further comprises a first pole insulation rib (471) and a second pole insulation rib (472);
the first pole insulation rib (471) is connected with the first oblique force transmission rib (441); and
the second pole insulation rib (472) is connected with the second oblique force transmission rib (442).

8. The battery pack according to any one of claims 2-7, wherein the cell component comprises a first battery module and a second battery module, and the first battery module and the second battery module are arranged side by side;
the first battery module comprises a plurality of first battery units (1), the plurality of first battery units (1) are stacked in sequence along an arrangement direction, and the first battery unit (1) comprises a first top cover plate (11) and a first pole (12) arranged on the first top cover plate (11);
the second battery module comprises a plurality of second battery units (2), the plurality of second battery units (2) are stacked in sequence along the arrangement direction, and the second battery unit (2) comprises a second top cover plate (21) and a second pole (22) arranged on the second top cover plate (21);
the support member (4) is arranged between the first top cover plate (11), the second top cover plate (21) and the case (3), and the support member (4) extends along the arrangement direction; and
the upper support rib (411) abuts against the first top cover plate (11) and the second top cover plate (21), respectively.

9. The battery pack according to claim 8, wherein a gap (5) is defined between the first battery unit (1) and the second battery unit (2); and
the support member (4) comprises a convex rib (481) arranged on a top of the upper support rib (411) and located in the gap (5).

10. A vehicle, comprising a battery pack according to any one of claims 1-9.
